# EUROPEAN PATENT APPLICATION

(11) **EP 1 227 674 A1**
(43) Date of publication of application: **31.07.2002**
(21) Application number: 00964735.5
(22) Date of filing: 06.10.2000
(51) Int. Cl.: H04N 5/445

(54) **TELEVISION PROGRAM BROADCASTING METHOD, TELEVISION RECEIVER, AND MEDIUM**

(30) Priority: 13.10.1999 JP 29088099
(71) Applicant: Dentsu Inc., Chuo-ku, Tokyo 104-8426 (JP)
(72) Inventor: AKIYAMA, Ryuhei Dentsu Inc., Chuo-ku, Tokyo 104-8426 (JP); MAEDA, Hiroki Dentsu Inc., Chuo-ku, Tokyo 104-8426 (JP)
(74) Representative: Hitching, Peter Matthew
(86) International application number: JP0007003
(87) International publication number: WO0128236

(57) **Abstract**

A sharp-image commercial suited to each viewer is provided. TV programs (a program R and a program S) are previously accumulated in a hard disk 11. A TV commercial (a commercial a, a commercial b,...) suited to the viewer is selected from among plural categories of TV commercials transmitted from respective enterprises, corresponding to pre-registered information on the viewer, and is accumulated in the hard disk memory 11. The TV commercial accumulated as a TV commercial televised in an interval of a TV program is inserted to edit a program 20. The viewer is able to watch the TV commercial suited to the viewer himself or herself together with the TV program by selecting the favorite program 20 by operating a remote controller 13 etc.

## Description

### Technical Field

The present invention relates to a television program broadcasting method and a television receiver for automatically selecting and broadcasting a TV program accumulated on a storage medium within the TV receiver in accordance with a taste of a viewer.

### Background Arts

Digital-waves-based satellite broadcasts have recently been spreading in TV broadcasts. Japan has TV receivers counted in between ten and twenty millions. The digital waves involve the use of transmission radio waves in a band of much higher frequencies than those of transmission radio waves in the conventional UHF or VHF band. Further, the TV broadcasts of the ground waves are on the verge of being televised through on the digital waves. In the digital-waves-based TV broadcasts, the viewer needs searching for a broadcast suited to a viewer's own taste from a multiplicity of TV programs that are broadcast.

Moreover, commercials televised together with the multiplicity of TV programs are broadcast regardless of the tastes of the viewers. As far as the viewer does not changes a TV channel, the viewer watches the commercial as its content transmitted from a transmitter shows. On the viewer side, however, it is desirable that only the commercials congenial to the tastes of the viewers or necessary for the viewers be broadcast. The present applicant already filed an application for a method (Japanese Patent Application No.10-303285) that will hereinafter be explained as a method of enabling the viewer to watch only contents congenial to the taste of the individual viewer.

According to this method, for instance, the individual viewer registers beforehand family's or viewer's own characteristic data. Then, the commercial congenial to the taste of the viewer or the necessary commercial based on the characteristic data is automatically broadcast.

The characteristic data registered by the viewer means family members, an age, tastes etc of the viewer. A method of registering these pieces of data includes a method by which the viewer directly registers the data by use of a register and a method of transferring the data to a specified agency and registering the data in a database of the agency.

In the case of the direct registration by the viewer, the viewer registers the characteristics of each home, e.g., an address, family members, an age, tastes etc by use of the remote controller 13 etc of the TV set. Then, a unique code for selecting the commercial suited to this home on the basis of those pieces of data, is determined. This unique code is recorded on a memory of the TV receiver.

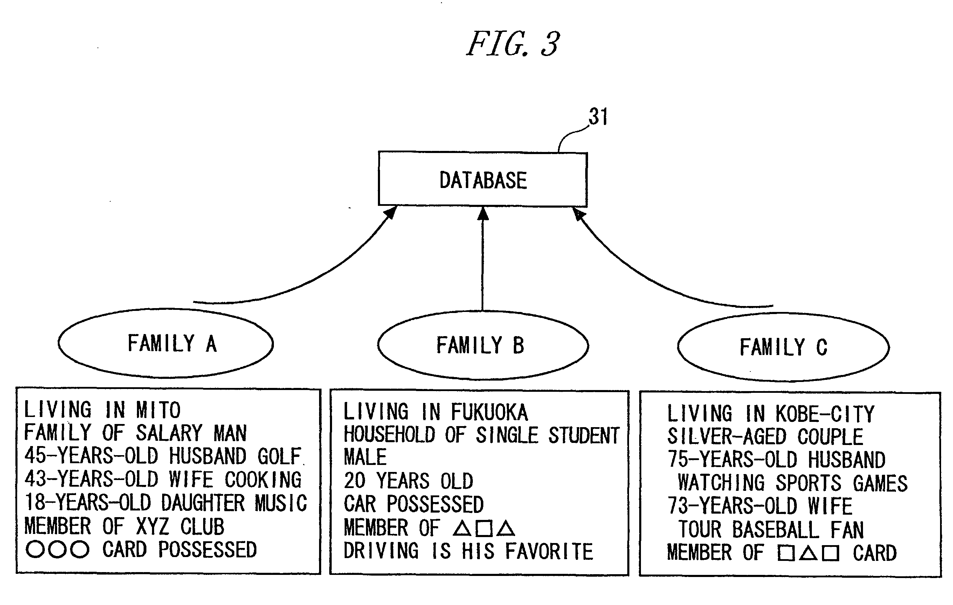

In the case of registering in the database, as shown in FIG. 3, the data characteristic of the individual viewer, e.g., a resident location of each home, family members, an age and a hobby of the individual, a member club, a name of card possessed and others, are registered in a specified agency and accumulated in a database 31. The agency, based on these pieces of registered data, transmits a unique code for selecting the commercial suited to each home to the TV receiver of each home via the Internet.

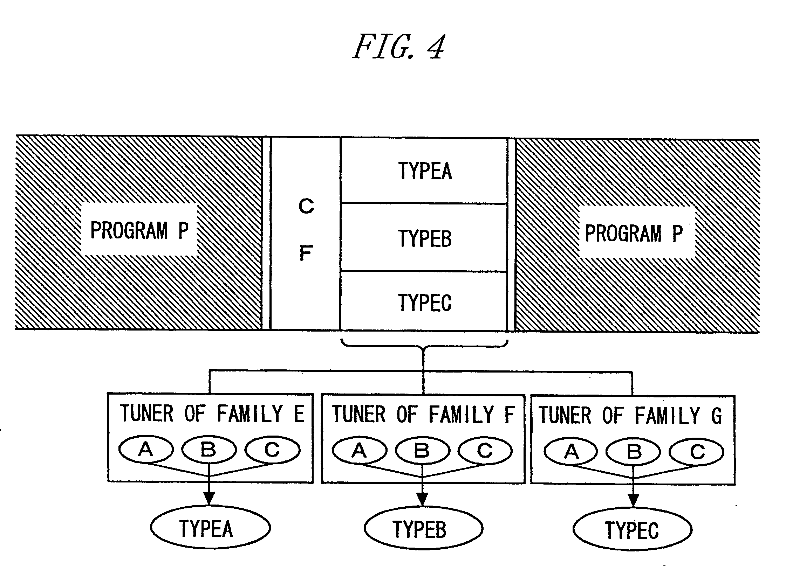

FIG. 4 is a schematic diagram showing how the commercials each different depending on the homes, i.e., the differences between the data registered by the respective homes, are selected from among a plurality of transmitted commercials and then received.

The commercials having three different contents such as a type A, a type B and a type C are simultaneously transmitted in the form of commercial signals (CF) televised in the middle of broadcasting a TV program P. With respect to the TV signals in FIG. 4, pictures in respective fields of the three different commercials are consecutively arranged in sequence. An assumption in FIG. 4 is that a family E, a family F and a family G watches the same TV program P. Then, an optimal commercial is selected from among the three commercials in accordance with the characteristic data registered and received by each of the receivers in the respective homes.

Note that if the commercial of the type A is selected, only the field picture relative to the type A is extracted from within the commercial signals consecutively arranged in sequence. The extracted picture is temporarily stored in the memory in the receiver and is, after executing an interpolation picture process (e.g., a prediction or motion compensation etc using pixels of the same frame picture or front and rear frame pictures) between the fields, projected on the TV screen. In the example in FIG. 4, the commercials are different corresponding to the characteristic data registered by the respective homes. For example, the home E, the home F and the home G select and receive the different commercials such as the type A, the type B and the type C, respectively.

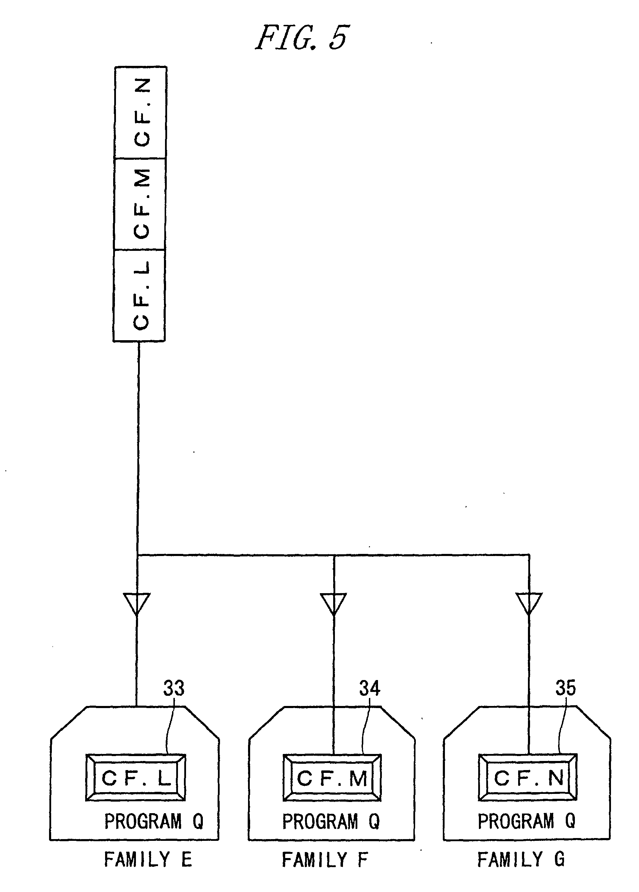

Next, FIG. 5 shows one mode in which the commercials are previously selected, received and stored on the storage medium incorporated into the TV receiver 10 itself, and are televised as the commercials broadcast in the intervals of the program.

In the example in FIG. 5, for transmitting the commercials suited to the respective homes in accordance with diversified tastes of the viewers, an increased number of categories of the commercials and differences in contents of the commercials between the local areas, a plurality of commercials (CF) L, M, N are transmitted beforehand as data broadcasts to the respective homes E, F and G.

The plurality of commercials L, M, N are transmitted beforehand to the respective homes via digital lines used for the data broadcasts . The plurality of commercials L, M, N contain preset distinction data (e.g., a broadcast starting time of the commercial, a local area code etc). Then, the commercials corresponding to the characteristic data pre-registered by the respective homes E, F, G are selected, received and stored on storage mediums 33, 34, 35 incorporated into the respective TV receivers. Then, the commercial stored is televised in an interval of a TV program Q instead of the original commercial televised in the interval of the program in accordance with the distinction data preset in the commercial. The respective commercials are stored on the storage mediums, corresponding to the characteristic data set in the homes. Therefore, the different commercials L, M, N suited to the individual homes are projected on the screens thereof at the same commercial time in the homes E, F, G where the families watch the same program.

The method of selecting and receiving the commercials congenial to the tastes of the viewer in the mode described above, however, needs executing such a video process as to sequentially insert different video signals into the TV signals televised. This method has a technically difficult point in terms of a processing time etc and also has a defect such as being hard to see the picture after being processed, and so on. This method is called as selective receipt or selective receiving.

Herein, the selective receipt implies amethodof selecting an arbitrary commercial from among plural categories of commercials transmitted from the transmitter and receiving this commercial, and using it as a commercial televised in the interval of the TV program by executing the predetermined video process.

Further, the TV program includes, in addition to the normal TV program and commercial, the video signals such as video mails etc edited beforehand by the transmitter side. The program means a TV program edited using the TV program and the commercial or the video mail etc. Moreover, the TV program, the commercial and the program are generally called contents. Further, the program may also be called a program content.

### Disclosure of the Invention

The present invention aims at providing a TV program broadcasting method capable of automatically selecting a commercial congenial to a taste of an individual viewer, and broadcasting the latest and sharp picture.

To accomplish the above object, according to the invention claimed in claim 1, a memory (11) in a television receiver (10) is stored with a television program of a digital broadcast received, a program in a fixed period of time is edited by synthesizing with other television program, and the edited program is repeatedly broadcast.

The broadcast connoted herein is, however, a concept implying that the program stored previously in the memory (11) is reproduced and displayed on the TV receiver (10).

Further, to accomplish the above object, according to the invention claimed in claim 2, the other television program is a commercial.

Moreover, to accomplish the above object, according to the invention claimed in claim 3, the other television program is a commercial, and the commercial can be selected from among those stored beforehand in the memory (11) and can be replaced with a commercial in the synthesized program.

Still further, to accomplish the above object, according to the invention claimed in claim 4, the television program broadcasting method is carried out in an on-demand system.

Further, according to the invention claimed in claim 5, a television receiver (10) receiving digital broadcasting waves, has a memory (11) storing a plurality of first contents received, and a control unit (12), wherein the control unit (12), when receiving a second content, selects one or more contents from among the plurality of first contents on the basis of a predetermined criterion, outputs the selected first contents at a predetermined timing, and gets a program composed of the first content and the second content watched.

Preferably, the first content may be a commercial, and the predetermined criterion may be determined based on an attribute of a viewer.

Preferably, this television receiver may further has a timer informing of the predetermined timing.

Preferably, the control unit (12) may detect a piece of timing information informing of the predetermined timing from the digital broadcasting waves.

Moreover, according to the invention claimed in claim 9, a television receiver (10) receiving digital broadcasting waves, has a memory (11) storing a content of a digital broadcast received, and a control unit (12), wherein the control unit (12) edits a program content by synthesizing a first content with a second content, and, gets the program content watched repeatedly.

Preferably, the memory (11) may further store relating information that relates the first content and the second content to each other, and the control unit (12) may synthesize the first content with the second content in accordance with the relating information. Herein, the relating information is, if the first content is, e.g., the commercial, a code indicating an advertiser who requests for this commercial. Namely, a proper commercial is selected from among the commercials of the same advertiser and synthesized with the second content.

Preferably, the memory (11) may further store a selecting criterion for selecting the first content, and the control unit (12) , based on this selecting criterion, may select one or more contents from among a plurality of first contents stored beforehand in the memory, and may synthesize the selected contents with the second content.

Preferably, the first content may be a commercial, the second content may contain a commercial, the memory (11) may store a selecting criterion for selecting one or more commercials from among a plurality of commercials, and the control unit (12), based on this selecting criterion, may select one or more commercials from among the plurality of commercials stored beforehand in the memory, and may replace the commercial contained in the second content with the selected commercial. Herein, the selecting criterion may be set based on, for instance, the attribute of the viewer.

According to the present invention, there is provided a readable-by-computer recording medium recorded with a program executed by a computer to provide the functions described above.

As described above, according to the inventions claimed in claims 1 and 2, the program is edited by synthesizing the programs accumulated beforehand with each other and then broadcast, and hence there is no necessity of executing such a conventional video process as to sequentially insert the different video signals into the TV signals televised. It is therefore possible to facilitate the technical process and provide the sharp picture.

Further, according to the invention claimed in claim 3, the plurality of commercials are previously accumulated in the memory, the commercial suited to the viewer is properly selected therefrom, and a content of the commercial is updated, whereby the commercial more suited to the viewer can be provided.

Further, according to the invention claimed in claim 4, the program is selected from among the plurality of TV programs accumulated and can be watched anytime, and a watching count of the viewer increases, whereby it is feasible to provide the viewer with the information of the commercials provided from a larger number of enterprises.

Moreover, according to the present invention, a sufficient time is given to the process of selecting the content in the selective display, and the sharp picture can be provided in a way that synchronizes the switchover of the content.

### Brief Description of the Drawings

FIG. 1 is a view of an architecture, showing one mode in which signals are stored on a recording medium on a television receiver and are regenerated on a TV screen;
FIG. 2 is a schematic diagram showing how a program is edited by using a TV program and a commercial that are accumulated according to a method of the present invention;
FIG. 3 is a diagram showing characteristic data of a viewer registered in a database by a conventional method;
FIG. 4 is a schematic diagram showing how commercials received from among a plurality of commercials in respective homes are different;
FIG. 5 is a diagram showing one mode in which the commercial stored on a storage medium of a TV receiver by the conventional method, is televised as the commercial in an interval of a program;
FIG. 6 is a view of a system architecture of a TV receiver 10 in a second embodiment;
FIG. 7 is a diagram of an image of a transmission path through on digital waves;
FIG. 8 shows a data structure of a program table distributed to the TV receiver 10;
FIG. 9 shows a data structure of an advertiser/commercial table;
FIG. 10 shows a data structure of CF header information for managing a content of the commercial;
FIG. 11 shows an example of an analytic result of a cluster analysis about tastes of dietary habits;
FIG.12 is a flowchart showing processes of a timer startup process;
FIG. 13 is a flowchart showing processes of a selective display process;
FIG. 14 is a diagram of an image of the transmission path through on the digital waves in a modified example of the second embodiment;
FIG. 15 is a flowchart showing processes by a replacement control unit 54 in the modified example of the second embodiment;
FIG. 16 is a flowchart showing a procedure of a program synthesizing process in a third embodiment; and
FIG. 17 is a flowchart showing a procedure of the program synthesizing process in a modified example of the third embodiment.

### Best Mode for Carrying out the Invention

Embodiments of a television program broadcasting method according to the present invention will hereinafter be described with reference to the accompanying drawings.

### «First Embodiment»

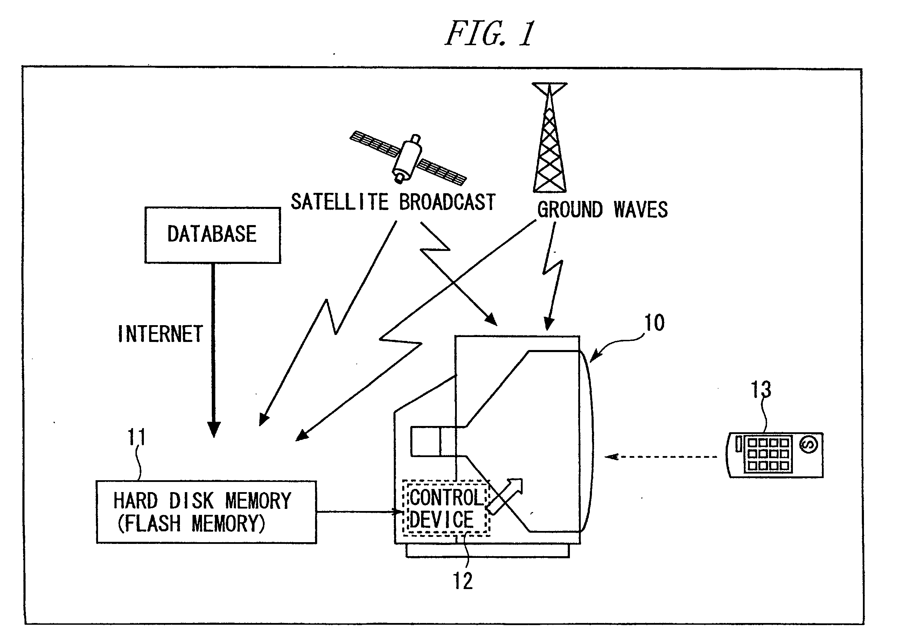

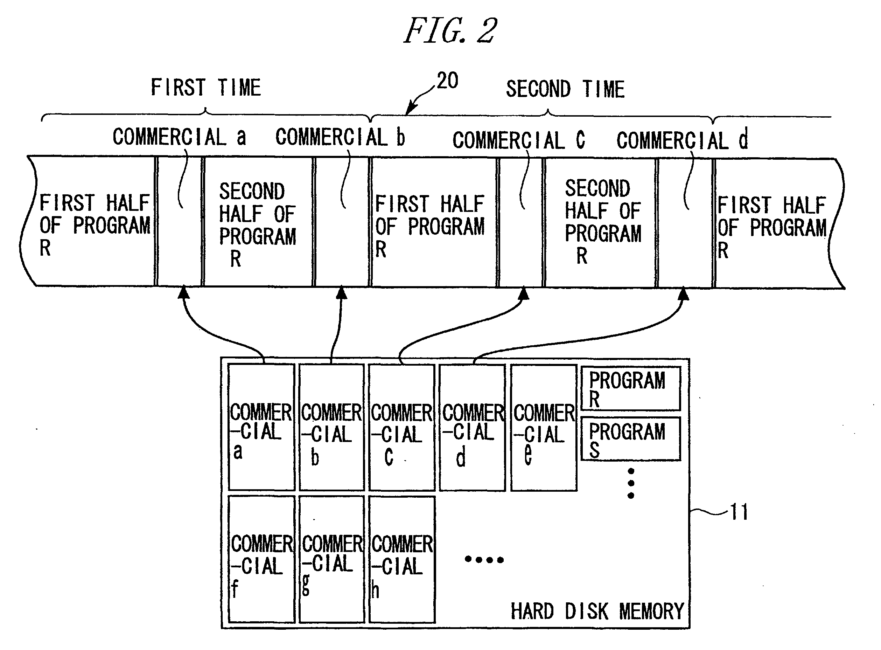

A first embodiment of the present invention will hereinafter be described referring to FIGS. 1 and 2.

### <Architecture>

FIG. 1 is a view of an architecture, showing one mode in which television (TV) signals transmitted are stored in a storage medium built in a television receiver 10 and are regenerated on a TV screen.

As shown in the Figure, the TV receiver 10 has a built-in control device 12 incorporating a large-capacity storage medium such as a hard disk memory (flash memory) 11 etc. Then, this hard disk memory 11 is accumulated with TV programs transmitted to specified viewers from a transmission side, programs of which recordings are reserved by the viewers and, in addition, advertising information from commercials as a beginning to video mails of respective enterprises. These pieces of information are transmitted through BS (Broadcasting Satellite), CS (Communications Satellite) or on TV signals of ground waves as data broadcasting using digital lines. Then, the accumulated TV programs (television programs) are broadcast by use of specified channels. Further, a commercial to be broadcast in an interval of the program is properly selected by the control device 12 from among a plurality of commercials accumulated, and projected on the TV screen.

A user switches over receiving channels of normal TV programs and specified channels for broadcasting the accumulated TV programs by using a remote controller 13.

### <Outline of Function>

FIG. 2 is a schematic diagram showing that the commercial to be broadcast in an interval of one single TV program is properly selected from among those accumulated in the hard disk memory 11 and then inserted, and a given program 20 is thus edited. The program 20 may be called synthesized program.

The hard disk memory 11 shown in FIG. 2 is provided within the TV receiver 10 of the viewer. This hard disk memory 11 is accumulated with the TV programs such as programs R, S etc and commercials a, b, c and others.

The TV programs accumulated therein are programs (which are herein the programs R) automatically accumulated in the hard disk memory 11 without any recording reservations of the viewers, and, in addition, the programs (which are herein the programs S) recorded and accumulated as choices of the viewers. The program R is a program (a carousel type program) repeatedly broadcast by using the specified channel after being accumulated. The viewer is able to watch a program anytime by selecting a specified channel thereof with the remote controller 13 etc. Further, the viewer is able to watch the program from the beginning as he or she intends even in the middle of broadcasting the program R by providing, for example, a from-the-beginning button and pressing this from-the-beginning button. On the other hand, the viewer can reproduce the program S by performing a given operation of the remote controller 13 as in the case of recording on the conventional VTR.

Among the plurality of commercials televised, the commercials (a, b, c...) suited to the individual viewers are selected and received, and are accumulated in the hard disk memory 11. The selections of the commercials suited to the individual viewers are made based on pre-registered attribute data about the individual viewers. A category of the attribute data means an address, family members, an age, tastes of the viewer and so on. The viewer registers the attribute data directly in the TV receiver 10 of the viewer by using, e.g., a registering device (the remote controller 13 etc).

When the attribute data are inputted, the control device 12 determines a commercial selection code for selecting the commercials suited to the viewer, corresponding to the attribute data, and stores it in the hard disk memory 11. On the other hand, each commercial televised is given beforehand an identification code for identifying a content of the commercial. This identification code is a code for identifying, e.g., an enterprise, its category, a televising time, a content of the broadcast and so on. Signals of the plurality of commercials televised are inputted to the control device 12. Then, the identification code is detected by a detection circuit provided in the control device 12. Further, a comparing circuit compares the identification code with the commercial selection code described above, thereby judging whether the identification code is suited to the viewer. As a result, only the commercials suited thereto are accumulated. A specific method of analyzing the digital signals is described in Japanese Patent Application Laying-Open Publication No.9-214875.

Given herein is a detailed explanation of how the commercials suited to the viewer are selected.

Now supposing that a certain car maker P is defined as a transmitter of the commercial, the car maker P simultaneously transmits plural categories of commercials. For instance, the first commercial is a commercial (a commercial a') having such a content as to enhance a dependency upon the car maker P . Further, the second commercial is a commercial (a commercial a) having such a content as to switch over a brand name to the car maker P from other makers, and so on.

While on the other hand, a viewer N is herein defined in a receiver side. The TV receiver 10 of the viewer N is stored with data about the viewer N as described above. Then, an assumption is that the viewer N owns a car of a maker other than the maker P. Accordingly, data showing that the viewer N owns the car other maker is stored as car data about the viewer N. In this case, the hard disk memory 11 of the viewer N is accumulated with the commercial a having such a content as to switch over the brand name to the maker P from other makers among the plurality of commercials transmitted from the car maker P.

Further, when a foods maker Q as a transmitter televises commercials of Chinese noodles, the commercials of plural types of Chinese noodles preferred by the locals are edited and televised. Namely, there are simultaneously televised plural types of commercials such as a Chine noodle a la Tokyo (a commercial b), a Chine noodle a la Kansai (a commercial b') , a Chine noodle a la Kyushu (a commercial b") and so on. On the other hand, data showing that the viewer N resides in Yokohama is stored as the data about the viewer N. Hence, in this case, among the plurality of commercials transmitted from the foods maker Q, the commercial of the Chine noodle a la Tokyo (the commercial b) is accumulated in the hard disk memory 11 of the viewer N.

This is because, for example, the Yokohamaites (citizens of Yokohama) and the Tokyoites (citizens of Tokyo) are categorized into the same cluster in terms of their dietary habits as a result of making a cluster analysis with respect to researches of questionnaires gathered beforehand.

Thus, the hard disk memories 11 of the individual viewers are accumulated with the commercials suited to the individual viewers among the commercials transmitted from the respective enterprises.

A program 20 consists of the program R (the first half of the program R and the second half of the program R) and the commercials a, b, c... accumulated in the hard disk memory 11. As shown in FIG. 2, the program R is, with the commercial inserted therein, sectioned into the first half of the program R and the second half of the program R. Then, the program R is repeatedly broadcast first time, second time and so forth. On the other hand, the commercial is inserted in an interval between the first half and the second half of the program R and inserted after the second half thereof each time the program R is broadcast. The type of the commercial inserted each time is predetermined by the transmitter. The control device 12 properly selects the commercial from among those accumulated in the hard disk 11 and inserts the commercial in the interval of the program or after the program. Namely, if the commercial to be inserted in the interval between the first half of the program R and the second half of the program R of the first time is the commercial of the car maker P, the commercial **a** for the car maker P accumulated in the hard disk memory 11 is selected and inserted. Further, if the commercial to be inserted after the second half of the program R broadcast first time is the commercial of the Chinese noodle of the foods maker Q, the commercial **b** accumulated in the hard disk memory 11 is selected based on a district where the viewer lives and then inserted.

In the discussion on the mode described above, a certain TV program R accumulated is repeatedly broadcast by using the specified channel. The embodiment of the present invention is not, however, stuck to this mode. For example, the program R may be a TV program provided by an on-demand system. For instance, a plurality of TV programs are previously accumulated in the hard disk memory 11. In this case, the viewer is able to select a want-to-watch program from a program selection menu displayed on the screen by operating the remote controller 13 etc, and watch this program any time.

With respect to the commercial that is broadcast in the interval of the selected TV program, the commercial suited to the viewer is properly selected from among the commercials accumulated by the same method as the above-mentioned. Then, one program 20 is edited and broadcast.

Further, if the TV program accumulated in the hard disk memory 11 is the program S accumulated through the recording reserved by the viewer, the commercial accumulated in the hard disk memory 11 is selected based on the commercial already inserted in the interval of the program when recording. For instance, if the commercial of the car maker P is inserted in the program S when recording the program S, the commercial **a** accumulated as the commercial of the car maker P beforehand in the hard disk memory 11, is used to replace the commercial by the control device 12 and then broadcast. Namely, when the viewer watches the program S in a reproduced mode, it follows that the commercial **a** is broadcast as the commercial of the car maker P.

Note that the commercials accumulated in the hard disk memory 11 can be easily updated by re-televising from the transmitter. Further, the viewer re-inputs the attribute data about the viewer himself or herself, thereby changing the category accumulated when updating the commercial. For example, if the viewer purchases a car of the maker P afresh, the viewer re-inputs the above data.

Note that a broadcasting station, an advertiser or an enterprise of an advertising agency etc may distribute the data to the viewers via the Internet etc instead of prompting the viewer to input the data for selecting such a commercial. Such an item of data may also be forcibly accumulated in the hard disk memory 11 irrespective of an intention of the viewer.

In the embodiment discussed above, the hard disk memory 11 incorporated into the TV receiver is used for accumulating the TV programs. The embodiment of the present invention is not, however, limited to this configuration. For instance, a hard disk connected from outside to the TV receiver may also be used. Further, a storage device of a home server connected via a network to the TV receiver may also be utilized.

This type of storage device is not confined to the hard disk and may involve the use of, for example, a semiconductor memory such as a flash memory and so on. Moreover, a demountable DVD-RAM and CD-RW etc may be used as mediums.

Further, the TV receiver may be a set-top box. Moreover, the digital broadcasting is not limited to the satellite broadcasting. For example, there may be received via a network of a cable TV.

### <<Second Embodiment>>

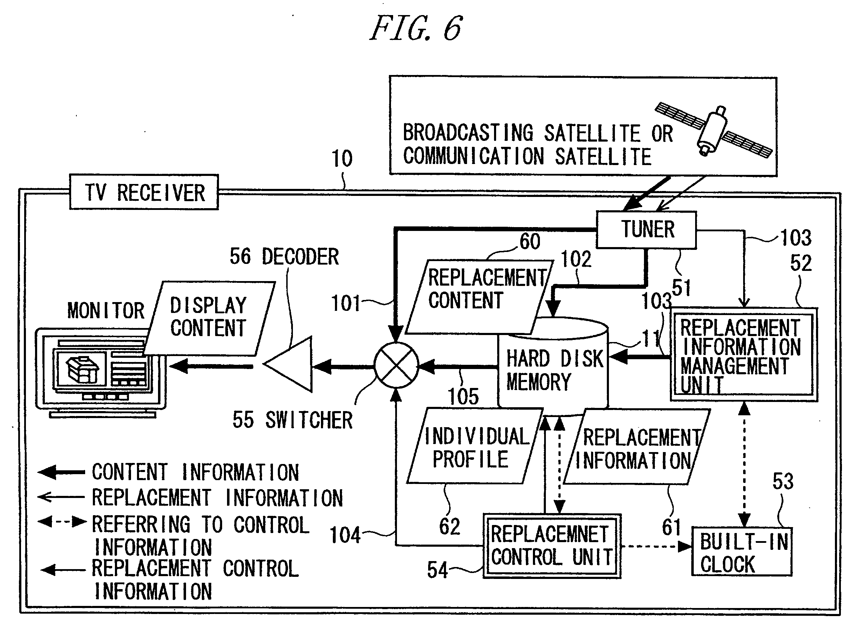

A second embodiment of the present invention will hereinafter be described with reference to FIGS. 6 through 15. What has been discussed in the first embodiment is the TV receiver 10 that provides the function by which the selectively received commercial **a** is combined and synthesized with the TV program R into one program 20, and the program 20 is stored in the hard disk memory 11 and repeatedly watched.

What will be explained in this embodiment is a TV receiver 10 in which the commercial contained in an on-watching TV program is replaced by a commercial accumulated beforehand in the hard disk memory 11. Other configurations and operations are the same as those in the first embodiment. Then, the same components are marked with the same numerals, and their explanations are omitted. Further, the drawings in FIGS. **1** through 5 will be referred to according to the necessity.

### <System Architecture>

FIG. 6 is a diagram of a system architecture of the TV receiver 10 in this embodiment. This TV receiver 10 has a tuner 51 for receiving the digital waves, the hard disk memory 11 for accumulating contents of the digital waves received, a switcher 55 for selecting any one of the tuner 51 and the hard disk memory 11, a decoder 56 for decoding the content selected by the switcher 55, a monitor for outputting in image and sound (including voice) the output of the decoder 56, a replacement information management unit 52 for control of updating the contents in the hard disk memory 11, a built-in clock 53 for counting a time, and a replacement control unit 54 for controlling the switcher 55.

Note that the replacement information management unit 52, the built-in clock 53 and the replacement control unit 54 are incorporated into the control device 12 shown in FIG. 1.

The tuner 51 receives the digital waves and generates digital data. Among pieces of digital data generated, contents (which will herein after be called display contents) for providing TV programs, are transferred to the monitor normally via the switcher 55 and the decoder 56, and outputted (arrow line 101).

On the other hand, the tuner 51 receives, in addition to the display content, a replacement content 60 in a different band. This replacement content 60 is a commercial to be replaced with a commercial in a specified program. The replacement content 60 is previously broadcast before a replacing target program is broadcast.

The replacement content 60 is identified by a predetermined content code. The tuner 51 receives this replacement content 60, and stores the replacement content 60 in the hard disk memory 11(arrow line 102).

Further, the broadcasting station repeatedly broadcasts partial replacement information 61 for a further replacement of the replacement content 60. The replacement information 61 contains a content code indicating a replacing target, and a version number identifying a replacement version. The hard disk memory 11 retains the replacement information 61 of the latest version for every content code of the replacing target among the received pieces of replacement information 61. The replacement content 60 is thereby ever-updated to the latest state.

On the other hand, the hard disk memory 11 includes an individual profile 62 inputted beforehand by the viewer.

The replacement control unit 54 within the TV receiver 10, when reaching a replacement start time, executes the followings:
(1) The information flowing to the decoder 56 is switched over to the hard disk memory 11 from the tuner 51 by controlling the switcher 55 (allow line 104).
(2) A content 60 suited to the viewer is selected from among the plurality of replacement contents 60 by referring to the individual profile 62.
(3) The hard disk memory 11 is commanded to flow the selected replacement content 60 to the switcher 55 (arrow line 105).

The replacement information management unit 52 receives the replacement information 61 from the broadcasting station and stores the information 61 in the hard disk memory 11 (arrow line 103).

The switcher 55 selects any one a receiving signal from the tuner 51 and a reading signal from the hard disk memory 11, and transmits the selected signal to the decoder 56. The switcher 55 is a so-called multiplexer.

The decoder 56 generates TV signals from the digital signal in a predetermined format and outputs the TV signals to the monitor.

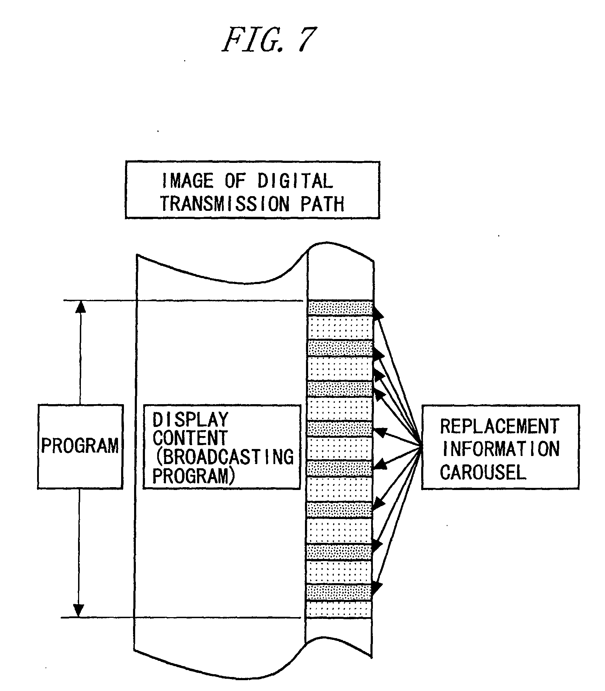

FIG. 7 is a diagram of an image of a transmission path of the digital waves. This transmission path is configured by a band for the display content and a band for the replacement information. The replacement information 61 is repeatedly broadcast independently of the display content (which is referred to as a replacement information carousel).

### <Data Structure>

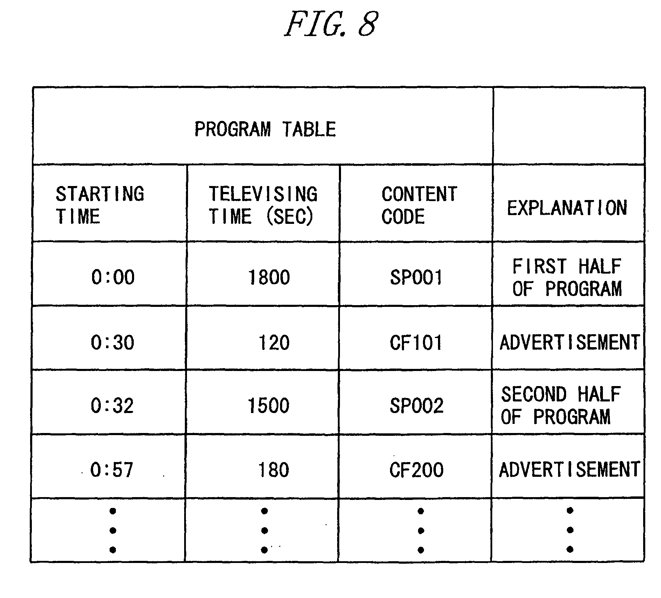

FIG. 8 shows a data structure of a program table distributed through on the digital waves everyday to the TV receiver 10. Respective lines in this program table correspond to the contents configuring one single program. Each of the lines in this program table has a "start time" field, a "televising time" field and a "content code" field.

The starting time is a time when the broadcast of the content is started. The televising time is a continuous time of the content and expressed in a unit of second. The content code is a code for identifying the content. In this embodiment, two head characters of the content code indicate a category of the content.

For example, if the content code is SP001, the head characters "SP" indicate a sports program. Further, head characters "CF" of CFO10 indicate that the content is a commercial.

Thus, the control device 12 recognizes that the content having the content code "SP001" is televised for 1800 seconds (30 minutes) from 0:00, and thereafter the commercial having the content code CF101 is televised for 120 seconds (2 minutes) .

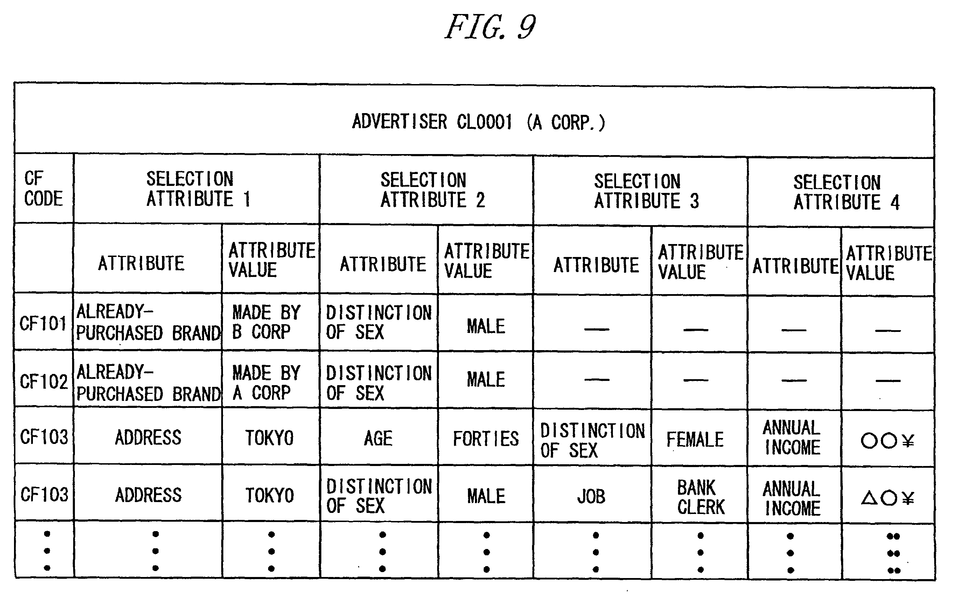

FIG. 9 shows a data structure of an advertiser/commercial table. This table contains categories of the commercials televised by every advertiser and selection attributes (corresponding to a selecting criterion) of whether the commercial shouldbe selected or not. FIG. 9 shows the commercial of, e.g., A Corp. as an advertiser designated by "CL0001".

As shown in FIG. 9, commercials of CF101, CF102, CF 103 are prepared for the advertiser CL0001. Each of the lines in this advertiser/commercial table corresponds to one commercial (the advertiser code corresponds to related information) . Each line contains a CF code and a plurality of selection attributes such as a selection attribute 1, a selection attribute 2 and others.

The CF code comes under on category of the content codes explained in FIG. 8. Namely, the CF code is the content code limited to the commercial.

The selection attribute indicates a viewer's attribute suited to the commercial concerned. The selection attribute is expressed by a couple of an attribute and an attribute value. For example, in the selection attribute 1 with respect to the CF code "CF101", information such as "Attribute: Already-purchased brand (product) , Attribute value: Made by B Corp.", indicates that the commercial shown by CF101 is suited to the viewer who has already purchased the brand (product) made by B Corp..

Further, In the selection attribute 1 with respect to the CF code "CF103", information such as "Attribute: Address, Attribute value: Tokyo" indicates that the commercial shown by CF103 is suited to the viewer living in Tokyo.

The selection attributes are shown such as the selection attribute 1, the selection attribute 2 etc in sequence according to the higher priority. If the selection attribute is coincident between the plurality of commercials, it is not determined from this selection attribute which commercial should be selected. In such a case, the judgement is made based on the following selection attributes of the priority.

For example, CF103 and CF104 are coincident in their selection attributes 1 each showing "Attribute: Address, Attribute value: Tokyo". In this case, it may be determined from the selection attributes 2 which commercial should be selected.

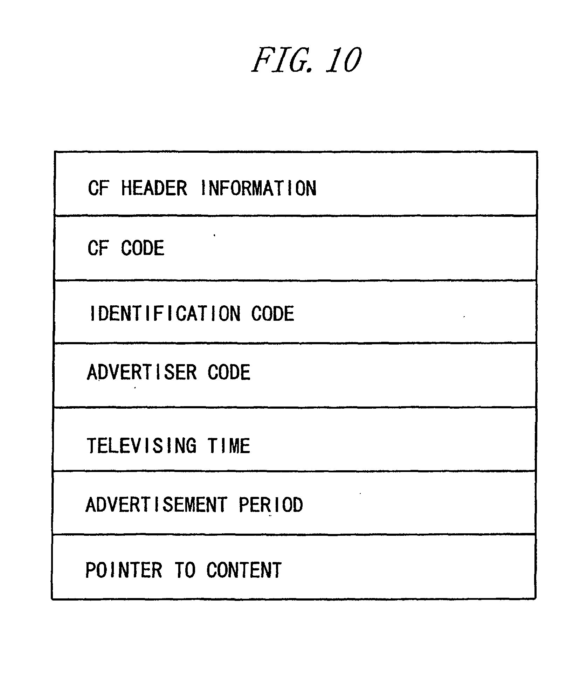

FIG. 10 shows CF header information for managing the content of the commercial. The CF header information contains a CF code, an identification code, an advertiser code, a televising time, an advertising period and a pointer to the content.

The CF code, the advertiser code and the televising time are the same as those shown in FIG. 9. The identification code is used for judging a relationship with the advertiser. For instance, the viewer is given a commercial selection code corresponding to the viewer's attribute from a commercial manager such as the advertising agency etc. The TV receiver 10 selects only the commercial having the identification code coincident with the commercial selection code. The identification code is used for selective receiving process or selective display process of the commercial described above.

The advertising period is an advertising period based on a contract with the advertiser. The pointer to the content is an address of the content in the hard disk memory 11, and points a head position of the content.

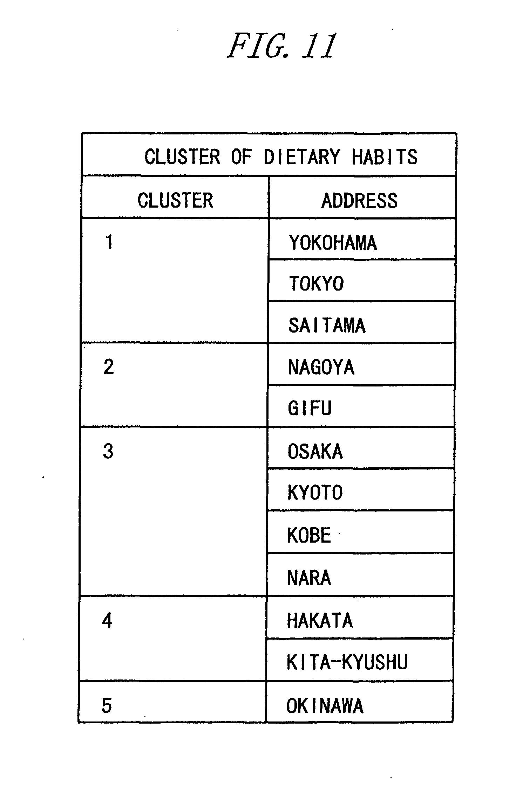

FIG. 11 shows an example of an analytic result of the cluster analysis of the dietary habits. This example is one instance where the results of questionnaires about tastes in the dietary habits are analyzed into clusters. In this example. A cluster 1 includes Yokohama, Tokyo and Saitama.

This shows that the residents in Yokohama, Tokyo and Saitama exhibit similar characteristics in terms of their tastes in the dietary habits. This the same with other clusters. Accordingly, for example, if there are televised commercials of Chinese noodles a la Tokyo and Kyushu, it is determined that the commercial of the Chinese noodle a la Tokyo should be televised to the viewers living in Yokohama as well as to Tokyoites.

### <Operation and Effects>

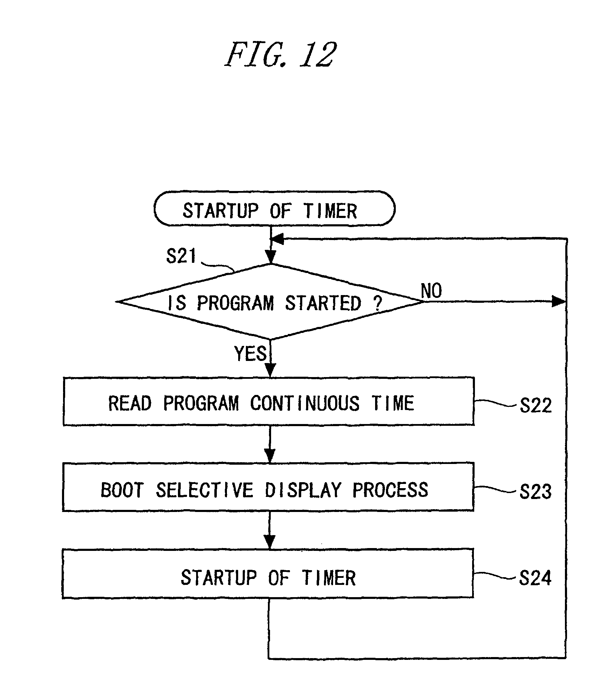

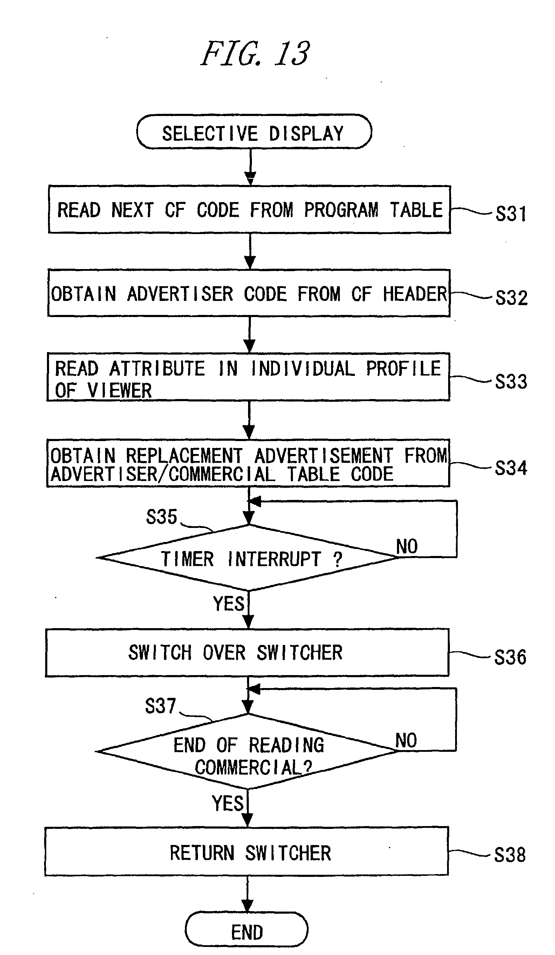

FIGS. 12 and 13 show a program executed by the replacement control unit 54. This program contains a timer startup process and a selective display process.

FIG. 12 is a flowchart showing processes of the timer startup process. This timer startup process, when booted, monitors a start of the program (S21).

The timer startup process, when detecting the start of the program from the header information of the display content, reads a televising time of the program from the program table (S22).

Next, the timer startup process boots a selective display process (S23).

Next, the timer startup process starts up the timer by specifying the televising time as a measurement time (S24). Thereafter, the timer startup process returns the control to S21. Note that when the specified measurement time elapses, a timer interrupt occurs in the timer.

FIG. 13 is a flowchart showing processes of the selective display process. The selective display process at first refers to the built-in clock 53. Then, the selective display process reads from the program table a CF code of a commercial that is televised next to the on-broadcasting program at the present time (S31).

Next, the selective display process searches for a CF header having that CF code. Then, an advertiser code of that commercial is obtained from this CF header (S32).

Next, the selective display process reads the viewer's attribute from the individual profile 62 of the viewer concerned (S33). For example, an address, an age, a distinction of sex, an annual income, an already-purchased brand and tastes of the viewer, are read out.

Next, the selective display process, based on the viewer's attribute, determines the CF code of the proper commercial from the advertiser/commercial table (S34). This is a process of obtaining the CF code coincident with the viewer's attribute from the advertiser/commercial table.

In this state, the selective display process waits for the timer interrupt (S35). When the timer interrupt occurs, the selective display process switches over the switcher 55 to the hard disk memory 11, and sends the commercial having the selected CF code to the decoder 56 (S36).

Next, the selective display process waits for the content of that commercial to be read out (S37). When finishing the readout of the commercial, the selective display process sets the switcher 55 back to the original state, and sends the content from the tuner to the decoder 56 (S38).

As described above, the TV receiver in this embodiment is capable of selecting the adequate commercial suited to the individual profile 62 of the viewer, and making the viewer watch it.

Further, this TV receiver 10 executes the process of selecting the commercial that should be selected from when starting the program. Then, the TV receiver 10, after determining the commercial that should be replaced, waits for the timer to count the time, switches over to this commercial. It is therefore possible to ensure the time sufficient for selecting the commercial and avoid both a deterioration of the image and a deficiency of the processing time due to the switchover.

### <Modified Example>

The TV receiver 10 in the embodiment discussed above previously obtains, as shown in FIG. 13, the CF code of the proper commercial from the individual profile 62 of the viewer and from the advertiser/commercial table. Then, this TV receiver 10 waits for the timer to count the time, and replaces the content of the previous commercial with the content of this commercial. The embodiment of the present invention is not, however, limited to this procedure.

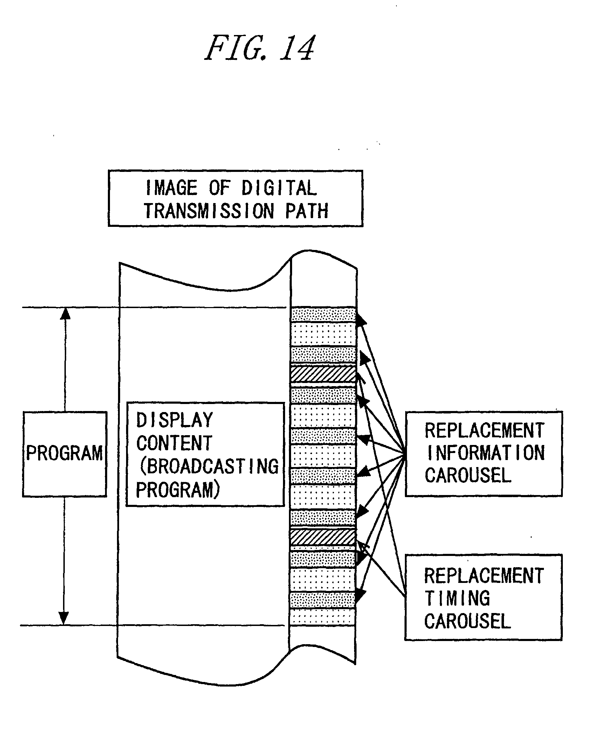

For example, the replacement timing may be indicated by the broadcasting station. FIG. 14 is a diagram of an image of the transmission path of the digital waves on which such an indication is transmitted. In addition to the normal program contents and the replacement information carousel, a replacement timing carousel is further transmitted through this transmission path. The TV receiver 10 can ensure a sufficient processing time for the replacement by controlling the transmission timing of this replacement timing carousel.

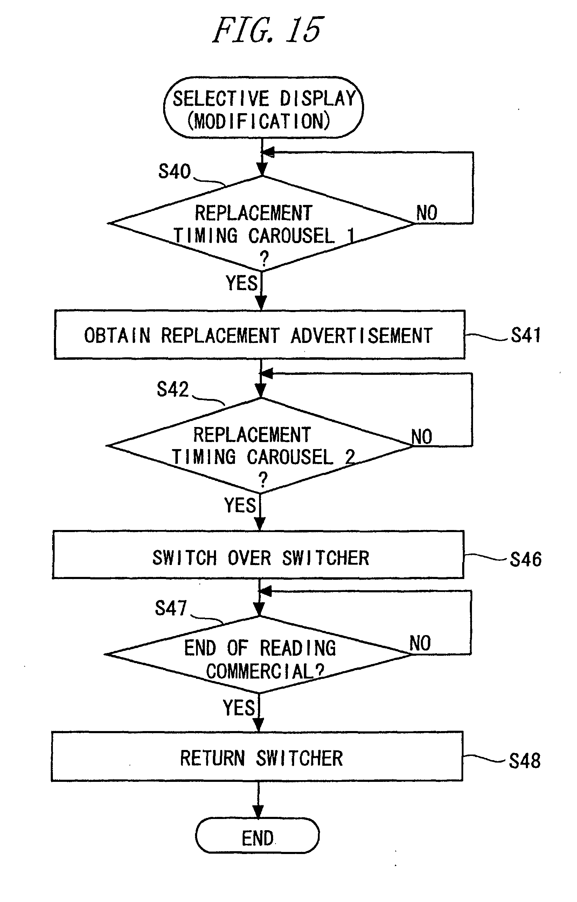

FIG. 15 shows a process of the replacement control unit 54 in that case. In this process , two types of replacement timing carousels are used. The first carousel is a replacement timing carousel 1 for starting the process of obtaining a replacement advertisement. The second carousel is a replacement timing carousel 2 for giving a command of a timing of switching over the switcher 55.

In this process, the replacement control unit 54 at first waits for receiving the replacement timing carousel 1 (S40).

When receiving the replacement timing carousel 1, the replacement control unit 54 obtains the replacement advertisement (S41). This process is the same as the process in S31 through S34 in FIG. 13, and hence its explanation is omitted. Thereafter, the replacement control unit 54 waits for receiving the replacement timing carousel 2 (S42).

When receiving the replacement timing carousel 2, the replacement control unit 54 switches over the switcher 56 (S46). The processes thereafter are the same as those FIG. 13, and hence their explanations is omitted.

Thus, the sufficient time for selecting the commercial to be replaced can be given to the TV receiver 10 by adjusting an interval between the replacement timing carousels 1 and 2. As a result, the problems in terms of the deterioration of the image and the processing speed can be avoided.

There have been shown the processes (S31 through S33 in FIGS. 13) of replacing one commercial in the processes of the selection displace process in the replacement of the commercial. The embodiment of the present invention is not, however, limited to this procedure. If one program is composed of a plurality of segments, the present invention can be embodied also in a case where one program is segmented into, for example, first through fourth quarters, and the commercial is televised at the end of every quarter.

For instance, if each quarter as an independent content is given a content code, each quarter is defined as an independent line shown in FIG. 8. Therefore, the program is managed in such a form that one commercial is televised for one content, and the replacement of the commercial can be executed as shown in FIG. 13.

Further, for example, if each quarter is not treated as the independent content, the control may also be done so as to repeat the processes in S31 through S33 in FIG. 13.

The TV receiver 10 in the embodiment described above detects the starting point of the program, indicates the timer to count the televising time of the program, and thus obtains the replacement timing. Further, the TV receiver 10 in the modified example explained above detects such a replacement timing by receiving the replacement timing carousel. The embodiment of the present invention is not, however, limited to this procedure.

For example, the present time is read from the built-in clock 53, the commercial televised within the predetermined time is read out of the program table, and the processes in FIG. 12 and 13 may be started up with respect to this commercial. A schedule management program for periodically doing such a startup may be executed by the control device 12.

In this case, the broadcasting station may inform of a time signal so as not to cause a large margin of error between the time of the built-in clock and the broadcasting time. With this contrivance, the commercial can be replaced without detecting the start of the program.

Further, the detection of the replacement timing carousel may be combined with the time counting by the timer. For instance, there may be a wait for the timer interrupt (S35 in FIG. 13) instead of waiting for receiving the replacement timing carousel 2 (S42).

In the embodiment described above, the advertiser code is used as the information that relates the plurality of commercials to be replaced. Then, the commercial in the program is replaced by the commercial selected from among the commercials belonging to the same advertiser. The embodiment of the present invention is not, however, limited to this procedure. For example, the commercial suited to the viewer may be selected irrespective of the advertiser.

### <<Third Embodiment>>

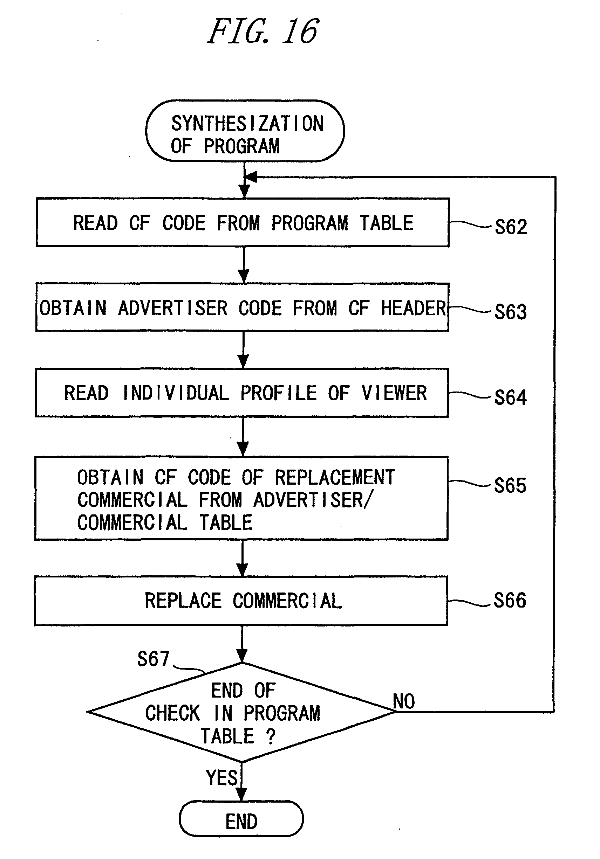

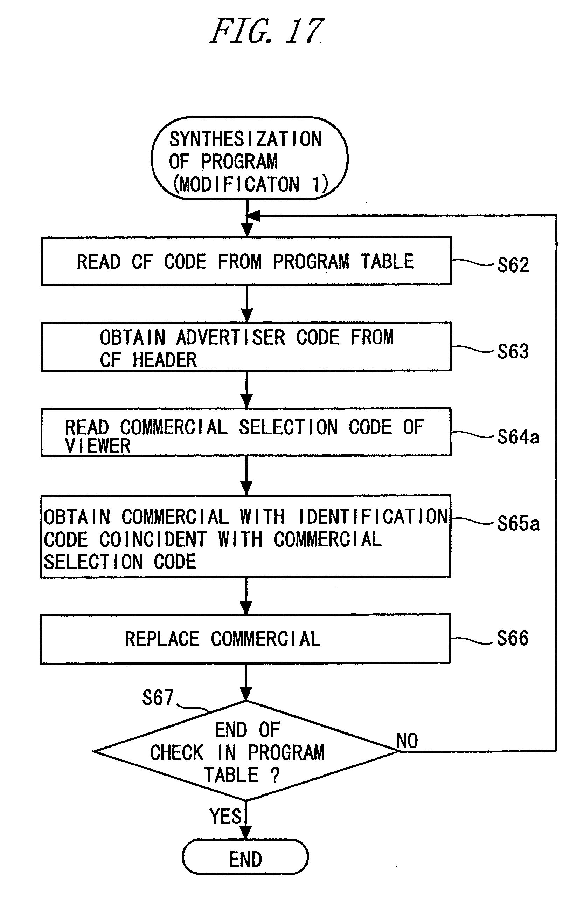

A third embodiment of the present invention will hereinafter be explained with reference to FIGS. 16 and 17. The discussion in the first embodiment has been put on the TV receiver 10 in which the commercial **a** selectively received is inserted in the TV program R and synthesized into one single program 2, and the program 2 is stored in the hard disk memory 11 and repeatedly watched.

Further, the discussion in the second embodiment has been put on the TV receiver 10 in which the commercial is replaced immediately before watching the program.

This embodiment will explain the TV receiver 10 in which the configuration in the first embodiment is combined with the configuration in the second embodiment. Namely, the TV receiver 10 in this embodiment selects the commercial according to an individual profile 62 of the viewer, previously synthesizes a program by replacing the commercial contained in the program with the selected commercial, and reproduces it repeatedly. Other configurations and operations are the same as those in the first and second embodiments. This being the case, the drawings in FIGS. 1 through 15 will be referred to according to the necessity.

FIG. 16 shows a procedure of a program synthesizing process executed by the control device 12. When the program table is distributed through on the digital waves, the control device 12 executes this process, and replaces the commercial in the program. The control device 12 checks the commercial in the program table, and synthesizes a new program by replacing this commercial with what is suited to the viewer concerned.

At first, the control device 12 reads a CF code of a next commercial from the program table (S62).

Next, the control device 12 obtains an advertiser code from a CF header of this commercial (S63).

Next, the control device 12 reads a viewer's attribute from the individual profile 62 of the viewer concerned (S64). For example, an address, an age, a distinction of sex, an annual income, an already-purchased brand and tastes of the viewer, are read out.

Next, the control device 12, based on the viewer's attribute, obtains the CF code of the proper commercial from the advertiser/commercial table (S65).

Next, the commercial is replaced based on a content of the obtained CF code, and a new program is thus edited (S66).

Next, the control device 12 judges whether the checks of the program table are finished (S67). If all the checks of the program table are not yet finished, the control device 12 returns the control to S62. Whereas if all the checks of the program table are finished, the control device 12 finishes the program synthesizing process.

As described above, the TV receiver 10 in this embodiment previously selects the content of the commercial suited to the viewer, and replaces the program commercial with this. It is therefore possible to make the viewer watch the program containing the commercial suited to the viewer by avoiding the deterioration of the image and the deficiency of the processing time due to the replacement of the commercial.

### <Modified Example>

The TV receiver 10 in the embodiment described above selects the commercial based on the individual profile 62 of the viewer. The embodiment of the present invention is not, however, limited to this procedure. For example, a commercial selection code is predetermined based on the viewer's attribute. On the other hand, the content of each commercial is given a predetermined identification code (see FIG. 10). Then, a content of the identification code coincident with the commercial selection code of the viewer, may be selected as a commercial for the replacement.

FIG. 17 shows the procedure of this program synthesizing process. In this process, the steps other than S64a and S65a are the same as those in FIG. 16. Then, the same steps are marked with the same symbols, and their explanations are omitted.

In the process in FIG. 17, in S64a, the control device 12 reads a commercial selection code of the viewer concerned from the individual profile 62.

Next, the control device 12 searches for a CF header containing the identification code coincident with the commercial selection code (S65a). Then, a new program is edited by replacing the commercial based on the content of the obtained identification code (S66).

In this example, the commercial selection process based on the judgement of the identification code is shown in the form of the flowchart. This function may be implemented as a program of the control device 12 or may also be implemented as hardware through a logical circuit with gates combined.

### <<Readable-by-Computer Recording Medium>>

A program for providing the function of the control device 12 illustrated in the embodiments described above can be recorded on a readable-by-computer recording medium. Then, the computer reads and executes the control program on this recording medium, thereby making it possible to function as the control device 12 of the TV receiver 10.

Herein, the readable-by-computer recording medium embraces recording mediums capable of storing information such as data, programs, etc. electrically, magnetically, optically and mechanically or by chemical action, which can be all read by the computer. What is demountable out of the computer among those recording mediums may be, e.g., a flexible disk, a magneto-optic disk, a CD-ROM, a CD-R/W, a DVD, a DAT, an 8mm tape, a memory card, etc..

Further, a hard disk, a ROM (Read Only Memory) and so on are classified as fixed type recording mediums within the computer.

### <<Data Communication Signal Embodied in Carrier Wave>>

Furthermore, the above program may be stored in the hard disk and the memory of the computer, and downloaded to other computers via communication media. In this case, the program is transmitted as data communication signals embodied in carrier waves via the communication media. Then, the computer downloaded with this program can be made to function as the control device 12 of the TV receiver 10 in the embodiments discussed above.

Herein, the communication media may be any one of a coaxial cable and a twisted pair cable, optical communication cables, satellite communications, ground wave wireless communications, etc.

Further, the carrier waves may be DC signals, and the data communication signal embodied on the carrier wave may be any one of a modulated broadband signal and an unmodulated base band signal.

### Industrial Applicability

The present invention can be embodied in an industry of manufacturing the receiver such as the TV receiver etc for receiving the digital broadcasts and in a service industry of providing the contents through the digital broadcasts.

## Claims

1. A television program broadcasting method in a given local area, comprising:
storing a memory in a television receiver with a television program of a digital broadcast received;
editing a program in a fixed period of time by synthesizing with other television program; and
repeatedly broadcasting said edited program.

2. A television program broadcasting method in a given local area according to claim 1, wherein said other television program is a commercial.

3. A television program broadcasting method in a given local area according to claim 1, wherein said other television program is a commercial, and
the commercial can be selected from among those stored beforehand in said memory and can be replaced with a commercial in said synthesized program.

4. A television program broadcasting method in a given local area according to any one of claims 1, 2 and 3, wherein said television program broadcasting method is carried out in an on-demand system.

5. A television receiver for receiving digital broadcasting waves, comprising:
a memory for storing a plurality of first contents received; and
a control unit,
wherein said control unit, when receiving a second content, selects one or more contents from among said plurality of first contents on the basis of a predetermined criterion, outputs said selected first contents at a predetermined timing, and gets a program composed of said first content and said second content watched.

6. A television receiver according to claim 5, wherein said first content is a commercial, and
said predetermined criterion is determined based on an attribute of a viewer.

7. A television receiver according to claim 5, further comprising a timer for informing of the predetermined timing.

8. A television receiver according to claim 5, wherein said control unit detects a piece of timing information informing of the predetermined timing from the digital broadcasting waves .

9. A television receiver receiving digital broadcasting waves, comprising:
a memory for storing a content of a digital broadcast received; and
a control unit,
wherein said control unit edits a program content by synthesizing a first content with a second content, and, gets the program content watched repeatedly.

10. A television receiver according to claim 9, wherein said memory further stores relating information that relates said first content and said second content to each other, and
said control unit synthesizes said first content with said second content in accordance with the relating information.

11. A television receiver according to claim 9, wherein said memory further stores a selecting criterion for selecting said first content, and
said control unit, based on this selecting criterion, selects one or more contents from among a plurality of first contents stored beforehand in said memory, and synthesizes said selected contents with said second content.

12. A television receiver according to claim 9, wherein said first content is a commercial,
said second content contains a commercial,
said memory stores a selecting criterion for selecting one or more commercials from among a plurality of commercials, and
said control unit, based on this selecting criterion, selects one or more commercials from among the plurality of commercials stored beforehand in said memory, and replaces the commercial contained in said second content with said selected commercial.

13. A readable-by-computer recording medium recorded with a program executed by a computer to which a television receiving unit is connected, said program comprising:
a step of storing a plurality of first contents received;
a step of selecting one or more contents from among said plurality of first contents on the basis of a predetermined criterion; and
a step of outputting, when receiving said second content, said selected first contents at a predetermined timing,
wherein a program composed of said first content and said second content is watched.

14. A readable-by-computer recording medium recorded with a program according to claim 13, wherein said first content is a commercial, and
said predetermined criterion is determined based on an attribute of a viewer.

15. A readable-by-computer recording medium recorded with a program according to claim 13, further comprising a step of starting up of a timer informing of the predetermined timing.

16. A readable-by-computer recording medium recorded with a program according to claim 13, further comprising a step of detecting a piece of timing information of the predetermined timing from digital broadcasting waves.

17. A readable-by-computer recording medium recorded with a program executed by a computer to which a television receiving unit is connected, said program comprising:
a step of storing a memory with a content received;
a step of editing a program by synthesizing a first content stored in said memory with a second content; and
a step of getting the program content watched repeatedly.

18. A readable-by-computer recording medium recorded with a program according to claim 17, further comprising: a step of referring to relating information that relates said first content and said second content to each other; and
a step of synthesizing said first content with said second content in accordance with the relating information.

19. A readable-by-computer recording medium recorded with a program according to claim 17, further comprising a step of referring to a selecting criterion for selecting one or more contents from among a plurality of first contents; and
a step of selecting, based on this selecting criterion, one or more contents from among said plurality of first contents,
wherein said first content selected is synthesized with said second content.

20. A readable-by-computer recording medium recorded with a program according to claim 17, wherein said first content is a commercial,
said second content contains a commercial, said program further comprising a step of referring to a selecting criterion for selecting one or more commercials from among a plurality of commercials , and selecting, based on this selecting criterion, one or more commercials from among the plurality of commercials, and
the commercial contained in said second content is replaced with said selected commercial.
